**Europäisches Patentamt**

**European Patent Office**

**Office européen des brevets**

(11) Veröffentlichungsnummer: **0 032 163**
**B1**

(12) ## EUROPÄISCHE PATENTSCHRIFT

(45) Veröffentlichungstag der Patentschrift:
**08.01.86**

(51) Int. Cl.⁴: **C 08 G 63/26**, C 08 G 63/70

(21) Anmeldenummer: **80106616.8**

(22) Anmeldetag: **29.10.80**

(54) **Verfahren zum Regenerieren und Aufarbeiten von inaktivem linearen Poly(alkylenterephthalat).**

(30) Priorität: **05.09.80 DE 3033469**
**21.12.79 DE 2951612**

(43) Veröffentlichungstag der Anmeldung:
**22.07.81 Patentblatt 81/29**

(45) Bekanntmachung des Hinweises auf die Patenterteilung:
**08.01.86 Patentblatt 86/2**

(84) Benannte Vertragsstaaten:
**AT BE CH FR GB IT LI LU NL SE**

(56) Entgegenhaltungen:
**EP - A - 0 003 961**
**DE - A - 1 570 689**
**DE - A - 2 503 000**
**DE - A - 2 918 675**

(73) Patentinhaber: **HÜLS AKTIENGESELLSCHAFT,**
**Patentabteilung / PB 15 - Postfach 13 20,**
**D-4370 Marl 1 (DE)**

(72) Erfinder: **Horlbeck, Gernot, Dr., In der Thiebrei 80,**
**D-4358 Haltern (DE)**
Erfinder: **Heuer, Horst, An der Landwehr 76,**
**D-4358 Haltern (DE)**
Erfinder: **Bax, Hanns-Jörg, Dr., Lipper Weg 193,**
**D-4370 Marl (DE)**
Erfinder: **Jadamus, Hans, Dr., Hervester Strasse 8,**
**D-4370 Marl (DE)**

## Beschreibung

Gegenstand der Erfindung ist ein Verfahren zum Regenerieren und Aufarbeiten von inaktivem linearen Poly(alkylenterephthalat) mit einer Viskositätszahl von mindestens 60 cm³/g in 2 Stufen und bei erhöhter Temperatur in fester Phase in Gegenwart von Alkandiolen, wobei in dem Poly(alkylenterephthalat) bis zu 30 Mol-% der Terephthalsäure durch andere an sich bekannte Dicarbonsäuren und bis zu 30 Mol-% des jeweiligen Diols durch andere an sich bekannte Diole ersetzt sein können oder bis zu 4 bis 40 Mol-% (bezogen auf das Poly(alkylenterephthalat) eines Poly(oxyalkylen)diols enthalten sein können.

Poly(alkylenterephthalate), besonders Poly(ethylenterephthalat) (PBTP) und Poly(butylenrephthalat) (PBTP), sind ausgezeichnete Werkstoffe zur Herstellung von Filmen, Folien, Formteilen etc.; insbesondere bei der Herstellung von Formteilen nach dem Spritzguss- und Extrusionsverfahren soll das Poly(alkylenterephthalat) eine Viskositätszahl > 100 cm³/g besitzen.

Die Poly(alkylenterephthalate) werden üblicherweise durch Um- oder Veresterung und anschliessende Polykondensation von Terephthalsäure oder deren polyesterbildenden Derivaten und einem Alkandiol in Gegenwart von Katalysatoren hergestellt (Sorensen und Campbell, Preparative Methods of Polymer Chemistry, Interscience Publishers Inc., N.Y. 1961, Seiten 111 bis 127; Kunststoff-Handbuch, Band VIII, C. Hanser Verlag München 1973).

Nach diesen in der Schmelze durchgeführten Verfahren können so hohe Viskositäten, wie sie z.B. für Spritzguss- und Extrusionszwecke benötigt werden, nicht erreicht werden, da aufgrund der Temperaturbelastung in der Polykondensationsstufe bereits Abbaureaktionen einsetzen, so dass die gewünschte hohe Viskosität nicht erreicht werden kann.

Um die gewünschten hohen Viskositäten zu erreichen, wird daher eine Festphasennachkondensation angeschlossen (GB-PS 1 066 162, US-PS 3 405 098). Dies geschieht in der Weise, dass der Polyester in Granulat- oder Pulverform auf Temperaturen gebracht wird, die etwa 10 bis 60 °C unterhalb des Schmelzpunktes liegen. In diesem Temperaturbereich wird das Poly(alkylenterephthalat) so lange im Inertgasstrom oder unter Vakuum behandelt, bis die gewünschte hohe Viskosität erreicht ist.

Bei der Nachkondensation in fester Phase tritt häufig das Problem auf, dass ein Ansatz sehr langsam und nur bis zu einer Viskosität kondensiert werden kann, die unterhalb des gewünschten hohen Niveaus liegt. Ein solches Poly(alkylenrephthalat) wird als passiv bzw. inaktiv bezeichnet (DE-AS 1 570 689).

Nach dem Stand der Technik werden diese inaktiven Poly(alkylenterephthalate) durch Alkoholyse oder Hydrolyse wieder zu niedermolekularen Bestandteilen abgebaut, um in einem neuen Ansatz polykondensiert zu werden (DE-OS 1 420 366).

So beschreibt beispielsweise DE-OS 1 420 366 den Abbau von Poly(ethylenterephthalat) mit Dimethylterephthalat und Ethylenglykol in Gegenwart von Katalysatoren zu einem niedrigviskosen Umesterungsgemisch.

In der DE-AS 1 570 689 wird vorgeschlagen, die Nachkondensation von Poly(ethylenterephthalat) nach einer Behandlung mit Ethylenglykol durchzuführen. Dabei muss das Produkt über mehrere Tage in Ethylenglykol eingeweicht werden. Beim Entfernen des überschüssigen Ethylenglykols bei einer Temperatur über 230 °C neigt das Material zum Anbacken. Führt man die Ethylenglykol-Behandlung bei hoher Temperatur (DE-AS 1 570 689, Beispiel 3) durch, um die Behandlungszeit auf eine technisch vertretbare Grössenordnung zu verkürzen, ist die Flüchtigkeit des Ethylenglykols bei diesen Temperaturen zu hoch, um bei Ansätzen in technischem Massstab eine Reaktivierung des Ansatzes zu erreichen.

Aufgabe der vorliegenden Erfindung war es, ein Verfahren zu entwickeln, nach dem ein inaktives Poly(alkylenterephthalat) regeneriert und aufgearbeitet werden kann, ohne dass das Verfahren mit den geschilderten Nachteilen des Standes der Technik behaftet ist.

Die Aufgabe wurde dadurch gelöst, dass in einer ersten Stufe das Poly(alkylenterephthalat) bei Temperaturen, die 30 bis 80 °C unterhalb des Schmelzpunktes des Poly(alkylenterephthalates) liegen, mit 0,3 bis 3,5 Gew.-% – bezogen auf das Poly(alkylenterephthalat) – eines Alkandiols, dessen Siedepunkt bei Normaldruck 20 bis 70 °C oberhalb der Reaktionstemperatur liegt, in einem Inertgasstrom behandelt wird, wobei die pro Stunde durchgeleitete Inertgasmenge – gemessen unter Normbedingungen (0 °C und 1013 mbar) – dem 0,3- bis 2fachen des Reaktorbruttovolumens entspricht und in einer zweiten Stufe das Poly(alkylenterephthalat) bei Temperaturen, die 5 bis 25 °C unterhalb des Schmelzpunktes des Poly(alkylenterephthalats) liegen, in einem Inertgasstrom kondensiert wird, wobei die pro Stunde durchgeleitete Inertgasmenge – gemessen unter Normbedingungen – dem 2,5- bis 10fachen des Reaktorbruttovolumens entspricht.

Als in der ersten Stufe erfindungsgemäss einzusetzende Alkandiole kommen solche mit 2 bis 6 C-Atomen in der Kohlenstoffkette wie z.B. Ethylenglykol, 1,4-Butandiol, 1,6-Hexandiol, Neopentylglykol, 1,3-Butandiol o.ä. infrage. Bevorzugt werden solche Diole verwendet, die auch in der Diolkomponente des Poly(alkylenterephthalats) verwendet worden sind. In jedem Fall muss beachtet werden, dass die erfindungsgemässe Temperaturdifferenz zwischen dem Siedepunkt des Diols und der Reaktionstemperatur eingehalten wird. Bevorzugt sind Diole, deren Siedepunkte 30 bis 60 °C oberhalb der Reaktionstemperatur liegen. Die Diole werden bevorzugt in einer Menge von 1 bis 2,5 Gew.-% – bezogen auf das Poly(alkylenterephthalat) – eingesetzt.

Die Reaktionstemperatur der ersten Stufe liegt vorzugsweise 35 bis 60 °C unterhalb des Schmelzpunktes des Poly(alkylenterephthalats).

In der zweiten Stufe wird eine Rekationstemperatur bevorzugt, die 10 bis 20°C unterhalb des Schmelzpunktes des Poly(alkylenterephthalats) liegt.

Die Reaktion wird in beiden Stufen üblicherweise unter Normaldruck ausgeführt; sofern erforderlich kann – insbesondere in der zweiten Stufe – auch mit Unterdruck gearbeitet werden.

Als Inertgas für die erste und zweite Stufe kommt insbesondere der üblicherweise für Polykondensationsreaktionen verwendete Stickstoff infrage. Andere Inertgase können jedoch gleichfalls eingesetzt werden. In der ersten Stufe wird vorzugsweise pro Stunde eine Inertgasmenge – gemessen unter Normbedingungen – durchgeleitet, die dem 0,5- bis 1,5fachen des Reaktorbruttovolumens entspricht. In der zweiten Stufe wird eine derartige Inertgasmenge bevorzugt, die pro Stunde dem 3- bis 7fachen des Reaktorvolumens entspricht.

Die Volumenangaben für die durchgeleiteten Inertgasmengen beziehen sich nicht auf die jeweiligen Reaktionsbedingungen, sondern auf Normalbedingungen, d.h. auf 0°C und 1013 mbar.

Das erfindungsgemässe Verfahren wird in der ersten Stufe so geführt, dass die Carboxylendgruppenkonzentration abnimmt. Erreicht die Konzentration ein Minimum bzw. annähernd ein Minimum, wird die Reaktion der ersten Stufe abgebrochen, und das Poly(alkylenterephthalat) wird gemäss der zweiten Stufe weiterbehandelt. Für die Beendigung der ersten Stufe ist zu berücksichtigen, dass die Viskositätszahl des Polyesters 45 bis 50 cm³/g nicht unterschreitet.

Die Verweilzeit des Poly(alkylenterephthalats) in der ersten Reaktionsstufe beträgt in Abhängigkeit von den genannten Parametern etw 2 bis 16, vorzugsweise 3 bis 10 Stunden, in der zweiten Reaktionsstufe liegt die Verweildauer etwa bei 4 bis 30, vorzugsweise 8 bis 25 Stunden.

Das erfindungsgemässe Verfahren ist grundsätzlich für alle Poly(alkylenterephthalat)-Typen geeignet, die aufgrund ihrer Vorbehandlung inaktiv sind, d.h. deren Viskosität noch nicht die gewünschte Grössenordnung erreicht hat und die sich mit Hilfe der bekannten Verfahren nicht auf ein höheres Viskositätsniveau polykondensieren lassen.

Derartige inaktive Poly(alkylenterephthalate) werden z.B. in DE-OS 1 420 366 bzw. DE-AS 1 570 689 beschrieben. Es handelt sich hierbei um Polyester, deren Endviskosität unterhalb des für den Anwendungsbereich notwendigen Viskositätsbereichs liegt. Übliche Massnahmen zur Erhöhung der Viskosität zeigen keinen oder nur einen zu geringen Erfolg; es ist jedoch auch möglich, dass es zu einem weiteren Abbau und damit Abfall der Viskositätszahl kommen kann.

Bei den für das erfindungsgemässe Verfahren geeigneten Polyestern handelt es sich um Poly(alkylenterephthalate), vorzugsweise Poly(ethylenterephthalat) und Poly(butylenterephthalat).

Bis zu 30 Mol-% der Terephthalsäure in den Poly(alkylenterephthalaten) können durch an sich bekannte andere Dicarbonsäuren ersetzt werden.

Beispiele geeigneter Dicarbonsäuren sind Isophthalsäure, Phthalsäure, 1,4-Cyclohexandicarbonsäure, Adipinsäure, Sebazinsäure oder Decandicarbonsäure.

Die Diolkomponente wird durch Alkandiole mit 2 bis evtl. 12 C-Atomen in der Kohlenstoffkette gebildet; bevorzugt sind hierbei Ethylenglykol bzw. 1,4-Butandiol. Bis zu 30 Mol-% der Diolkomponente des jeweiligen Poly(alkylenterephthalats) können durch andere Diole, wie beispielsweise Neopentylglykol, 1,5-Pentandiol, 1,6-Hexandiol, 1,4- bzw. 1,3-Dimethylolcyclohexan oder 1,12-Dodecandiol ersetzt sein.

Unter den Begriff Poly(alkylenterephthalat) werden auch Blockcopolyester gerechnet. Derartige Produkte werden z.B. in Chimia 28 (9), 544 bis 552, (1974) und in Rubber Chemistry and Technology 50, 688 bis 703, (1977), beschrieben. Diese Blockcopolyester enthalten neben den obengenannten aromatischen Dicarbonsäuren und Alkandiolen ein Poly(oxyalkylen)diol mit einem Molgewicht im Bereich von etwa 600 bis 2500. Bevorzugte Poly(oxyalkylen)diole sind Poly(oxyethylen)diol, Poly(oxypropylen)diol und Poly(oxytetramethylen)diol. Der Anteil der Poly(oxyalkylen)diole liegt im Bereich von 4 bis 40 Gew.-%, vorzugsweise von 10 bis 35 Gew.-% (bezogen auf den gesamten Blockcopolyester).

Die Viskositätszahl der inaktiven Poly(alkylenterephthalate) liegt im Bereich von 60 bis etwa 120 cm³/g.

Die in dem erfindungsgemässen Verfahren eingesetzten linearen Poly(alkylenterephthalate) können Hilfs- und Zusatzstoffe enthalten. Hierfür kommen z.B. Nucleierungs-, Mattierungs-, Fliessmittel oder andere Verarbeitungsmittel sowie Pigmente, Füll- und Verstärkungsstoffe o.ä. infrage.

Nucleierungs-, Mattierungs-, Fliessmittel oder andere Verarbeitungsmittel sind in Mengen bis 6 Gew.-%, bevorzugt von 0,2 bis 3,5 Gew.-%, bezogen auf die Gesamtmischung, im Poly(alkylenterephthalat) enthalten.

Pigmente, Füll- und Verstärkungsstoffe o.ä. sind in Mengen bis 60 Gew.-%, bevorzugt von 1 bis 50 Gew.-%, bezogen auf die Gesamtmischung, im Poly(alkylenterephthalat) enthalten.

Die Hilfs- und Zusatzstoffe können bereits zu Beginn der ersten Stufe der Kondensationsreaktion im Poly(alkylenterephthalat) vorligen, sie können jedoch auch zu jedem späteren Zeitpunkt eingearbeitet werden.

Mit Hilfe des erfindungsgemässen Verfahrens ist es möglich, in technischen Grössenordnungen durch die jeweilige Vorbehandlung inaktiv gewordene Poly(alkylenterephthalate) in vertretbarer Zeit zu regenerieren und aufzuarbeiten. Dadurch wird es möglich, Polyester, die im Herstellungsverfahren unbrauchbar geworden waren und verworfen werden mussten, einer üblichen Weiterverwendung wieder zuzuführen.

Darüber hinaus zeigen die erfindungsgemäss hergestellten Poly(alkylenterephthalate) verbesserte Hydrolyse- und Schmelzstabilität. So eignen sie sich beispielsweise zur Herstellung von Monofilamenten für Filtergewebe, an die hohe Anforderungen bezüglich der genannten Eigenschaften gestellt werden.

Die in der Beschreibung und in den Beispielen angeführten Parameter wurden mit Hilfe der nachstehend genannten Messmethoden bestimmt:

Als Schmelzpunkt $[T_m]$ wird das durch Differential-Thermocalorimetrie (DSC) ermittelte Schmelzmaximum des Polyesters bezeichnet (Aufheizgeschwindigkeit 16 °C/min).

Die Viskositätszahlen [J] wurden an Lösungen von 0,23 g Poly(alkylenterephthalat) in 100 ml Phenol/1.1.2.2-Tetrachlorethan (Gewichtsverhältnis 60:40) bei 25 °C gemessen.

Die Carboxylendgruppenkonzentrationen [COOH] wurden nach der Methode von H. A. Pohl (Analyt. Chem. 26, 1614–1954) bestimmt.

Die Hydrolysestabilität der Polyester wurde durch die Abnahme der Viskositätszahl nach einer 24 stündigen Behandlung des feingemahlenen Materials mit 130 °C heissem Wasser in einem Drucktopf charakterisiert. –

Der Abbau betrifft die Hydrolysestabilität der Polyester; er wird als prozentuale Abnahme der Viskositätszahl durch die Hydrolyse angegeben:

$$\frac{J_o - J_{Hydr.}}{J_o} \cdot 100$$

($J_o$ = Ausgangsviskositätszahl, $J_{Hydr.}$ = Viskositätszahl nach dem Hydrolysetest).

Die mit Buchstaben gekennzeichneten Versuche sind nicht erfindungsgemäss.

Beispiele

Die angegebenen Stickstoffmengen sind unter Normbedingungen gemessen.

Versuche 1 bis 5 (Tabelle 1 und 2)

In einem 0,5 m³-Taumeltrockner werden 120 kg Poly(butylenterephthalat) ([J]: 95 cm³/g; [COOH]: 100 Äqu./$10^6$ g; $T_m$: 225 °C) mit 1,4-Butandiol versetzt, im Stickstoffstrom auf 180 °C erhitzt und 5 bis 10 Stunden bei dieser Temperatur belassen; dann werden der Stickstoffdurchsatz auf 2 m³/h und die Innentemperatur auf 210 °C erhöht. Unter diesen Bedingungen werden die Polyester 8 bis 24 Stunden nachkondensiert.

Versuch A (Tabelle 2)

120 kg eines Poly(butylenterephthalats) wie in den Versuchen 1 bis 5 werden im 0,5 m³-Taumeltrockner ohne Zusatz von 1,4-Butandiol bei 210 °C und 2 m³/h $N_2$ nachkondensiert.

Versuche 6 bis 8 (Tabelle 4)

In einem 250 cm³-Rundkolben werden 30 g inaktives Poly(butylenterephthalat)-Granulat ([J]: 95 cm³/g; [COOH]: 100 Äqu./$10^6$ g; ($T_m$): 225 °C) mit Alkandiol versetzt und unter Rühren behandelt. Danach wird die Probe auf 210 °C erhitzt und entsprechend den Versuchen 1 bis 5 nachkondensiert.

Tabelle 1
Verfahrensmassnahmen in der 1. Stufe

| Versuch | 1,4-Butandiol-Zusatz [Gew.-%] | $N_2$-Durchsatz [m³/h] | Behandlungszeit [h] |
|---|---|---|---|
| 1 | 1,0 | 0,50 | 10 |
| 2 | 1,5 | 0,50 | 10 |
| 3 | 1,5 | 0,75 | 10 |
| 4 | 1,5 | 0,50 | 5 |
| 5 | 2,0 | 0,75 | 10 |

Tabelle 2
Fortschreiten der Polykondensation in der 2. Stufe

| Versuch | J [cm³/g] nach einer Polykondensationszeit von | | | [COOH] (Äqu./$10^6$ g) nach einer Polykondensationszeit von | | |
|---|---|---|---|---|---|---|
| | 8 h | 16 h | 24 h | 8 h | 16 h | 24 h |
| 1 | 120 | 137 | 139 | 40 | 41 | 40 |
| 2 | 111 | 144 | 159 | 25 | 26 | 27 |
| 3 | 119 | 143 | 151 | 28 | 27 | 26 |
| 4 | 113 | 134 | 156 | 26 | 26 | 24 |
| 5 | 98 | 122 | 145 | 20 | 19 | 18 |
| A | 95 | 94 | 94 | 100 | 102 | 105 |

Tabelle 3
Hydrolysestabilität der aufgearbeiteten Poly(buty-lenterephthalate)

| Versuch | J [cm³/g] vor der Hydrolyse | nach | Abbau [%] |
|---|---|---|---|
| 1 | 139 | 97 | 30 |
| 2 | 159 | 128 | 19,5 |
| 3 | 151 | 130 | 14 |
| 4 | 157 | 130 | 17 |
| 5 | 145 | 142 | 2 |
| A | 95 | 52 | 45 |

Tabelle 4

| Versuch | 1. Stufe Alkandiol | Zusatz [Gew.-%] | Behandlungs-temperatur [°C] | -zeit [h] | $N_2$-Durchsatz [l/h] | 2. Stufe Behandlungs-temperatur [°C] | -zeit [h] | $N_2$-Durchsatz [l/h] | J*) [cm³/g] |
|---|---|---|---|---|---|---|---|---|---|
| 6 | 1,6-Hexandiol | 2 | 188 | 6 | 0,25 | 210 | 6 | 1,00 | 154 |
| 7 | 1,3-Butandiol | 3 | 170 | 8 | 0,20 | 210 | 8 | 0,75 | 186 |
| 8 | 1,3-Butandiol | 1 | 170 | 6 | 0,20 | 210 | 8 | 0,75 | 182 |

*) Nach Abschluss der Aufarbeitung

Versuche 9 bis 12 (Tabelle 5)

30 g inaktives granuliertes Poly(ethylenterephthalat) ([J]: 90 cm³/g; [COOH]: 81 Äqu./10⁶ g; $T_m$: 254 °C) werden in einen 250 cm³-Rundkolben gegeben, mit Alkandiol versetzt und unter Rühren behandelt. Danach wird die Temperatur auf 235 °C erhöht und die Probe bei dieser Temperatur im Stickstoffstrom 16 bis 20 Stunden nachkondensiert.

Versuche B und C (Tabelle 5)

Jeweils 30 g Granulat des auch für die Versuche 9 bis 12 verwendeten Poly(ethylenterephthalats) werden ohne/mit Zusatz von Alkandiol unter sonst gleichen Bedingungen nachkondensiert. –

Tabelle 5

| Versuch | 1. Stufe Alkandiol | Zusatz [Gew.-%] | Behandlungs-temperatur [°C] | -zeit [h] | $N_2$-Durchsatz [l/h] | 2. Stufe Behandlungs-temperatur [°C] | -zeit [h] | $N_2$-Durchsatz [l/h] | J*) [cm³/g] |
|---|---|---|---|---|---|---|---|---|---|
| 9 | 1,4-Butandiol | 2 | 200 | 8 | 0,25 | 235 | 20 | 1,00 | 110 |
| 10 | 1,4-Butandiol | 2 | 210 | 6 | 0,25 | 235 | 20 | 0,75 | 115 |
| 11 | 1,4-Butandiol | 1 | 200 | 3 | 0,20 | 235 | 20 | 0,75 | 113 |
| 12 | 1,6-Hexandiol | 1 | 200 | 7 | 0,25 | 235 | 16 | 1,00 | 111 |
| B | – | – | – | – | – | 235 | 20 | 1,00 | 88 |
| C | Ethylenglykol | 2 | 200 | 8 | 0,25 | 235 | 24 | 1,00 | 93 |

*) Nach Abschluss der Aufarbeitung

Versuch 13

120 kg Blockcopolyester ([J]: 84 cm³/g; [COOH]: 93 Äqu./10⁶ g; $T_m$: 215 °C) aus 57 Gew.% Terephthalsäure, 30 Gew.-% 1.4-Butandiol und 13 Gew.-% Poly(oxytetramethylen)diol mit $\bar{M}_n$ = 1000 werden in einem 0,5 m³-Taumeltrockner mit 1,8 kg 1.4-Butandiol versetzt und dann in zwei Stufen kondensiert.

1. Stufe: 8 h / 180 °C / 0,5 m³ $N_2$/h
2. Stufe: 24 h / 200 °C / 2 m³ $N_2$/h / 40 hPa

Danach betragen die Viskositätszahl J 150 cm³/g und die Carboxylendgruppenkonzentration [COOH] 24 Äqu./10⁶ g.

## Versuch 14

150 kg Blockcopolyester ([J]: 105 cm³/g; [COOH]: 85 Äqu./10⁶ g; $T_m$: 209 °C) aus 46 Gew.-% Terephthalsäure, 22 Gew.-% 1.4-Butandiol und 32 Gew.-% Poly(oxytetramethylen)diol mit $\bar{M}_n$ = 1000 werden mit 1,2 kg 1.4-Butandiol versetzt und dann in 2 Stufen kondensiert.

1. Stufe: 8 h / 175 °C / 0,5 m³ N₂/h
2. Stufe: 24 h / 195 °C / 2 m³ N₂/h / 40 hPa Danach betragen die Viskositätszahl J 173 cm³/g und die Carboxylendgruppenkonzentration [COOH] 22 Äqu./10⁶ g.

## Versuch 15

100 kg Blockcopolyester ([J]: 85 cm²/g; [COOH]: 96 Äqu./10⁶ g; $T_m$: 212 °C) aus 54 Gew.-% Terephthalsäure, 28 Gew.-% 1,4-Butandiol und 18 Gew.-% Poly(oxytetramethylen)diol mit $\bar{M}_n$ = 1000 werden in einem 0,5 m³-Taumeltrockner mit 1,5 kg 1,4-Butandiol versetzt und dann in zwei Stufen kondensiert.

1. Stufe: 8 h / 175 °C / 0,5 m³ N₂/h
2. Stufe: 16 h / 200 °C / 2 m³ N₂/h / 40 hPa Danach betragen die Viskositätszahl [J] 176 cm³/g und die Carboxylendgruppenkonzentration [COOH] 28 Äqu./10⁶ g.

## Versuch D

65 kg Blockcopolyester ([J]: 84 cm³/g; [COOH]: 71 Äqu./10⁶ g; $T_m$: 215 °C) aus 57 Gew.-% Terephthalsäure, 30 Gew.-% 1,4-Butandiol und 13 Gew.-% Poly(oxytetramethylen)diol mit $\bar{M}_n$ = 1000 werden ohne Zusatz von 1.4-Butandiol in einem 0,5 m³-Taumeltrockner in fester Phase kondensiert.

Bedingungen: 24 h / 200 °C / 2 m³ N₂/h / 40 hPa Danach beträgt die Viskositätszahl [J] 96 cm³/g und die Carboxylendgruppenkonzentration [COOH] 68 Äqu./10⁶ g.

## Versuch 16

In einem 0,5 m³-Taumeltrockner werden 150 kg mit 30 Gew.-% Schnittglasfasern verstärktes inaktives Poly(butylenterephthalat) ([J]: 115 cm³/g; [COOH]: 96 Äqu./10⁶ g; $T_m$: 225 °C) mit 1,88 kg ($\triangleq$ 1,25 Gew.-%/Mischung) 1,4-Butandiol versetzt, im Stickstoffstrom (0,5 m³/h) auf 180 °C erhitzt und 10 Stunden bei dieser Temperatur belassen. Dann werden der Stickstoffdurchsatz auf 2 m³/h und die Innentemperatur auf 210 °C erhöht. Unter diesen Bedingungen wird das Material nachkondensiert. Nach 16 Stunden beträgt die Viskositätszahl [J] 165 cm³/g, die Carboxylendgruppenkonzentration [COOH] liegt bei 19 Äqu./10⁶ g.

Der Abbau der Viskositätszahl nach dem Hydrolysetest beläuft sich auf 9%.

## Versuch E

150 kg des in Versuch 16 näher bezeichneten verstärkten Poly(butylenterephthalats) werden im 0,5 m³-Taumeltrockner ohne Zugabe von 1,4-Butandiol bei 210 °C und 2 m³/h N₂ nachkondensiert. Nach 16 Stunden ist die Viskositätszahl unverändert, [COOH] beträgt 104 Äqu./10⁶ g.

Der Abbau der Viskositätszahl nach Hydrolysetest beläuft sich auf 53%.

## Patentansprüche

1. Verfahren zum Regenerieren und Aufarbeiten von inaktivem linearen Poly(alkylenterephthalat) mit einer Viskositätszahl von mindestens 60 cm³/g in 2 Stufen und bei erhöhter Temperatur in fester Phase in Gegenwart von Alkandiolen, wobei in dem Poly(alkylenterephthalat) bis zu 30 Mol-% der Terephthalsäure durch andere an sich bekannte Dicarbonsäuren und bis zu 30 Mol-% des jeweiligen Diols durch andere an sich bekannte Diole ersetzt sein können oder bis zu 4 bis 40 Mol-% (bezogen auf das Poly(alkylenterephthalat) eines Poly(oxyalkylendiols enthalten sein können, dadurch gekennzeichnet, dass in einer ersten Stufe das Poly(alkylenterephthalat) bei Temperaturen, die 30 bis 80 °C unterhalb des Schmelzpunktes des Poly(alkylenterephthalats) liegen, mit 0,3 bis 3,5 Gew.-% – bezogen auf das Poly(alkylenterephthalat) – eines Alkandiols, dessen Siedepunkt bei Normaldruck 20 bis 70 °C oberhalb der Reaktionstemperatur liegt, in einem Inertgasstrom behandelt wird, wobei die pro Stunde durchgeleitete Inertgasmenge – gemessen unter Normalbedingungen – dem 0,3- bis 2fachen des Reaktorbruttovolumens entspricht und in einer zweiten Stufe das Poly(alkylenterephthalat) bei Temperaturen, die 5 bis 25 °C unterhalb des Schmelzpunktes des Poly(alkylenterephthalats) liegen, in einem Inertgasstrom kondensiert wird, wobei die pro Stunde durchgeleitete Inertgasmenge – gemessen unter Normbedingungen – dem 2,5- bis 10fachen des Reaktorbruttovolumens entspricht.

2. Verfahren nach Anspruch 1, dadurch gekennzeichnet, dass das Poly(alkylenterephthalat) in der ersten Stufe bei Temperaturen, die 35 bis 60° unterhalb des Schmelzpunktes des Poly(alkylenterephthalats) liegen, behandelt wird.

3. Verfahren nach Anspruch 1 und 2, dadurch gekennzeichnet, dass das Poly(alkylenterephthalat) in der ersten Stufe mit 1 bis 2,5 Gew.-% – bezogen auf das Poly(alkylenterephthalat) – eines Alkandiols behandelt wird.

4. Verfahren nach Anspruch 1 bis 3, dadurch gekennzeichnet, dass das Poly(alkylenterephthalat) in der ersten Stufe mit einem Alkandiol behandelt wird, dessen Siedepunkt bei Normaldruck 30 bis 60 °C oberhalt der Reaktionstemperatur liegt.

5. Verfahren nach Anspruch 1 bis 4, dadurch gekennzeichnet, dass in der ersten Stufe eine Inertgasmenge durchgeleitet wird, die – gemessen unter Normbedingungen – dem 0,5- bis 1,5fachen des Reaktorbruttovolumens entspricht.

6. Verfahren nach Anspruch 1, dadurch gekennzeichnet, dass das Poly(alkylenterephthalat) in der zweiten Stufe bei Temperaturen kondensiert wird, die 10 bis 20 °C unterhalb des Schmelzpunktes des Poly(alkylenterephthalats) liegen.

7. Verfahren nach Anspruch 1 und 6, dadurch gekennzeichnet, dass in der zweiten Stufe eine Inertgasmenge durchgeleitet wird, die – gemessen unter Normbedingungen – dem 3- bis 7fachen das Reaktorbruttovolumens entspricht.

## Claims

1. A process for regenerating and working-up an inactive linear poly(alkylene terephthalate) having a viscosity number of at least 60 cm³/g in two stages and at elevated temperature in the solid phase in the presence of an alkanediol, up to 30 mol % of the terephthalic acid in the poly(alkylene terephthalate) being optionally replaced by one or more other known dicarboxylic acids and up to 30 mol % of the respective diol in the poly(alkylene terephthalate) being optionally replaced by one or more other known diols or the poly(alkylene terephthalate optionally containing up to 4 to 40 mol % (based on the poly(alkylene terephthalate) of a poly(oxyalkylene) diol, characterised in that
in a first stage the poly(alkylene terephthalate) is treated at a temperature 30 to 80 °C below its melting point in an inert gas stream with 0.3 bis 3.5 wt.%, based on the poly(alkylene terephthalate), of an alkanediol whose boiling point at standard pressure is 20 to 70 °C above the reaction temperature, the quantity of inert gas flowing through per hour – measured at standard conditions – being 0.3 to 2 times the gross volume of the reactor, and
in a second stage the poly(alkylene terephthalate) is condensed at a temperature 5 to 25 °C below its melting point in an inert gas stream, the quantity of inert gas flowing through per hour – measured at standard conditions – being 2.5 to 10 times the gross volume of the reactor.

2. A process according to claim 1, characterised in that the poly(alkylene terephthalate) is treated in the first stage at a temperature 35 to 60 °C below its melting point.

3. A process according to claim 1 or 2, characterised in that the poly(alkylene terephthalate) is treated in the first stage with 1 to 2.5 wt.% – based on the poly(alkylene terephthalate) – of an alkanediol.

4. A process according to any of claims 1 to 3, characterised in that the poly(alkylene terephthalate) is treated in the first stage with an alkanediol whose boiling point at standard pressure is 30 to 60 °C above the reaction temperature.

5. A process according to any of claims 1 to 4, characterised in that in the first stage the quantity of inert gas flowing through per hour – measured at standard conditions – is 0.5 to 1.5 times the gross volume of the reactor.

6. A process according to claim 1, characterised in that the poly(alkylene terephthalate) is condensed in the second stage at a temperature 10 to 20 °C below its melting point.

7. A process according to claim 1 or 6, characterised in that in the second stage the quantity of inert gas flowing through per hour – measured at standard conditions – is 3 to 7 times the gross volume of the reactor.

## Revendications

1. Procédé pour la régénération et le retraitement de poly-(téréphtalate d'alkylène) linéaire inactivé, ayant un indice de viscosité d'au moins 60 cm³/g, en deux étapes et à température élevée, en phase solide, en présence d'alcanediols, jusqu'à 30 mol% de l'acide téréphtaliques dans le poly(téréphtalate d'alkylène) pouvant être remplacés par d'autres acides dicarboxyliques en eux-mêmes connus et jusqu'à 30 mol% du diol dont il s'agit pouvant être remplacés par d'autres diols en eux-mêmes connus, ou bien jusqu'à 4 à 40 mol% (relativement au poly-(téréphtalate d'alkylène)) d'un poly(oxyalkylène)-diol pouvant être contenue,
caractérisé par le fait qu'en une première étape, on traite un courant de gaz inerte le poly-(téréphtalate d'alkylène), à des températures qui sont inférieures de 30 à 80 °C au point de fusion du poly-(téréphtalate d'alkylène), par 0,3 à 3,5% en poids, relativement au poly-(téréphtalate d'alkylène), d'un alcane-diol dont le point d'ébullition à la pression normale est supérieur de 20 à 70 °C à la température de réaction, la quantité de gaz inerte que l'on fait passer par heure, mesurée dans les conditions normales, correspondant à 0,3 à 2 fois le volume brut du réacteur et qu'en une deuxième étape, on condense dans un courant de gaz inerte le poly-(téréphtalate d'alkylène) à des températures qui sont inférieures de 5 à 25 °C au point de fusion de poly-(téréphtalate d'alkylène), la quantité de gaz inerte que l'on fait passer par heure, mesurée dans les conditions normales, correspondant à 2,5 à 10 fois le volume brut du réacteur.

2. Procédé selon la revendication 1, caractérisé par le fait qu'à la première étape, on traite le poly-(téréphtalate d'alkylène) à des températures qui sont inférieures de 35 à 60 °C au point de fusion du poly-(téréphtalate d'alkylène).

3. procédé selon les revendications 1 et 2, caractérisé par le fait qu'à la première étape on traite le poly-(téréphtalate d'alkylène) par 1 à 2,5% en poids, relativement au poly-(téréphtalate d'alkylène), d'un alcane-diol.

4. Procédé selon les revendications 1 à 3, caractérisé par le fait qu'à la première étape on traite le poly-(téréphtalate d'alkylène) par un alcane-diol dont le point d'ébullition à la pression normale est supérieur de 30 à 60 °C à la température de réaction.

5. Procédé selon les revendications 1 à 4, caractérisé par le fait qu'à la première étape on fait passer une quantité de gaz inerte qui, mesurée dans les conditions normales, correspond à 0,5 à 1,5 fois le volume brut du réacteur.

6. Procédé selon la revendication 1, caractérisé par le fait qu'à la deuxième étape on condense le poly-(téréphtalate d'alkylène) à des températures qui sont inférieures de 10 à 20 °C au point d'ébullition du poly-(téréphtalate d'alkylène).

7. Procédé selon les revendications 1 et 6, caractérisé par le fait qu'à la deuxième étape on fait passer une quantié de gaz inerte qui, mesurée dans les conditions normales, correspondant à 3 à 7 fois le volume brut du réacteur.